Europäisches Patentamt

European Patent Office

Office européen des brevets

(19)

(11) EP 1 059 134 B1

(12) FASCICULE DE BREVET EUROPEEN

(45) Date de publication et mention
de la délivrance du brevet:
**26.01.2005 Bulletin 2005/04**

(51) Int Cl.7: **B22F 9/22**, C01G 49/06,
C01G 53/04, C01G 51/04,
H01M 6/36

(21) Numéro de dépôt: **00401628.3**

(22) Date de dépôt: **08.06.2000**

(54) **Procédé de préparation de poudres métalliques, poudres métalliques ainsi préparees, et compacts incluant ces poudres**

Verfahren zur Herstellung von metallischen Pulvern, Pulver so hergestellt und Presslingen die diese Pulver enthalten

Process for the production of metallic powders, powders thus prepared and compacts including these powders

(84) Etats contractants désignés:
**AT BE CH CY DE DK ES FI FR GB GR IE IT LI LU MC NL PT SE**

(30) Priorité: **10.06.1999 FR 9907340**

(43) Date de publication de la demande:
**13.12.2000 Bulletin 2000/50**

(73) Titulaires:
• **ASB Aerospatiale Batteries**
  **18021 Bourges (FR)**
• **UNIVERSITE PAUL SABATIER (TOULOUSE III)**
  **Etablissement public a caractère scientifique, culturel et professionnel**
  **31062 Toulouse Cédex4 (FR)**

(72) Inventeurs:
• **Tailhades, Philippe**
  **31650 Saint-Orens de Gameville (FR)**
• **Carles, Valérie**
  **31120 Pinsaguel (FR)**
• **Rousset, Abel**
  **31520 Ramonville St Agne (FR)**

(74) Mandataire: **Weber, Etienne Nicolas et al**
  **c/o Société de Protection des Inventions,**
  **3, rue du Docteur Lancereaux**
  **75008 Paris (FR)**

(56) Documents cités:
FR-A- 2 278 669          FR-A- 2 587 989
US-A- 3 955 961          US-A- 3 994 819
US-A- 4 414 021

**Description**

L'invention concerne un procédé de préparation de poudres métalliques, en particulier de poudre de fer.

Le terme « poudre métallique » couvre aussi bien les poudres de métaux purs que les poudres d'alliages de métaux.

Plus précisément, l'invention a trait à un procédé de préparation de poudres métalliques, en particulier de poudre de fer par réduction thermique d'oxalates de métaux de transition ou de terres rares, ou d'oxydes résultant de la décomposition des oxalates de métaux de transition ou de terres rares, par exemple, d'oxalate ferreux ou d'oxydes de fer résultants de la décomposition d'oxalates ferreux, ces oxalates ou oxydes étant constitués de grains à morphologie en aiguilles présentant une taille, plus précisément une longueur, spécifique.

La poudre de métal, par exemple la poudre de fer préparée présente une structure spongieuse et filamenteuse et égale voire dépasse les spécifications courantes pour une telle poudre métallique, par exemple, une telle poudre de fer, ce qui la rend particulièrement adéquate à de nombreuses utilisations, en particulier à une utilisation dans les compositions chauffantes pour piles thermiques, lorsqu'il s'agit de poudre de fer.

L'invention concerne, en outre, les compacts métalliques crus ou recuits obtenus par application d'une pression de compactage sur les poudres métalliques selon l'invention, accompagné éventuellement d'un frittage partiel.

L'invention concerne de nombreuses applications ou utilisations nécessitant la mise en oeuvre par pressage d'une ou plusieurs poudres de métaux, purs ou alliés, associés ou non à d'autres composés ultérieurement enfermés dans la porosité du compact.

Parmi ces applications ou utilisations, on peut citer, par exemple, la fabrication de mélanges pyrotechniques comprenant la poudre de fer selon l'invention et un oxydant, d'électrodes poreuses utilisées notamment pour les accumulateurs d'énergie électrique, telles que les piles électrochimiques Ni-Cd ou Ni-métal hydrure, etc., de matériaux magnétiques doux ou durs, tels que les induits de moteurs électriques, et les aimants permanents, de supports de catalyseurs, dans lesquels une poudre catalytique est emprisonnée dans la structure métallique poreuse, de filtres pouvant éventuellement utiliser les propriétés ferromagnétiques de certains métaux pour des séparations magnétiques et, plus généralement, de pièces mécaniques de formes complexes qui peuvent être réalisées par simple pressage, en évitant un recours à des opérations complexes d'usinage.

Le domaine technique de l'invention peut donc être défini comme celui des poudres métalliques et de leur préparation, ainsi que des compacts métalliques crus ou recuits préparés par pressage à partir de ces poudres, ce pressage étant éventuellement accompagné d'un frittage partiel.

De tels compacts trouvent leur utilisation dans de nombreux secteurs de l'industrie, dans lesquels ils doivent présenter une résistance mécanique élevée.

Les compacts préparés à partir des poudres métalliques connues présentent une résistance mécanique nettement insuffisante.

De manière préférée, mais non limitée, l'invention se situe plus particulièrement dans le domaine des piles thermiques.

L'invention concerne en particulier une composition pyrotechnique chauffante comprenant la poudre de métal, en particulier la poudre de fer, selon l'invention, ainsi que la pile thermique comprenant cette composition pyrotechnique chauffante.

Les piles thermiques sont des piles non rechargeables, inertes avant leur amorçage, qui peuvent être stockés sans entretien pendant parfois plus de 20 ans tout en restant utilisables à tout instant avec un temps de réponse parfois inférieur à trois dixièmes de secondes.

Les piles thermiques voient leur utilisation croître dans tous les domaines où l'on a besoin d'une énergie immédiatement disponible, de manière fiable, même après un temps de stockage très long.

Les piles thermiques sont ainsi principalement utilisées dans l'industrie aéronautique et spatiale mais aussi dans tous les systèmes d'urgence ou de secours qui requièrent une telle source d'énergie par exemple dans l'industrie nucléaire, pétrolière, les batiments commerciaux et de stockage etc...

La composition compactée fer/perchlorate de potassium est la composition pyrotechnique chauffante classique des piles thermiques.

En effet, cette composition a montré une nette supériorité vis-à-vis des compositions dites « papier » zirconium/chromate de baryum en usage dans le passé comme composition pyrotechnique chauffante des piles thermiques.

Les performances de ces piles thermiques sont directement liées aux propriétés de cette composition et en particulier à la microstructure de la poudre de fer.

La poudre de fer la plus couramment utilisée jusqu'à présent dans les compositions chauffantes fer/perchlorate de potassium pour piles thermiques est la poudre commercialisée sous la dénomination de poudre NX-1000 par la société PFIZER METAL and Composite Products de Walkingford Connecticut, Etats-Unis ou par la société AMETEK® Speciality Metal Products Division.

Cette poudre de fer répond aux spécifications suivantes que doit remplir une poudre de fer pour piles thermiques : une structure spongieuse, une teneur en fer total supérieure à 95 %, une teneur en fer élémentaire supérieure à 89 %, une surface spécifique Sw ($m^2$/g) supérieure à 0,5 $m^2$/g, une perte à l'hydrogène inférieure à 3 %, une densité Scott de 0,8 à 1,15, une sous granulométrie Fischer de 1,5 à 3,5 μm, une granulométrie dans laquelle plus de 70 % des particules passent par le tamis d'ouverture 44 μm et moins de 1 % des particules sont retenues par le tamis d'ouverture 150 μm, une « Green force » ou tenue du compact (déterminée selon la norme ASTM B312-56T) supérieure à 35 MPa pour une pression de formage de 276 MPa.

De nombreux procédés ont été décrits dans la littérature pour préparer de la poudre de fer, mais aucun de ces procédés ne permet de préparer de la poudre de fer pouvant être utilisée dans les compositions chauffantes pyrotechniques pour piles thermiques, et répondant aux spécifications indiquées ci-dessus.

Le document US-A-4 414 021 est relatif à un procédé de préparation de poudre de fer convenant pour une utilisation dans les mélanges chauffants pyrotechniques fer-perchlorate de potassium des piles thermiques.

Ce procédé comprend la préparation d'un précipité dense, homogène, d'hydroxyde de fer par précipitation à partir d'une solution aqueuse d'un sel ferrique, d'acides formique et sulfurique, d'hydroxyde d'ammonium et d'urée en tant qu'agent de précipitation.

Le précipité dense obtenu est ensuite réduit par de l'hydrogène à 650 à 900°C pendant 0,5 à 2 heures pour préparer la poudre de fer qui présente une structure en éponge et qui répond aux spécifications indiquées ci-dessus.

Le précipité obtenu dans la première étape du procédé est un oxyhydroxyde de fer qui répond généralement à la formule FeOOH, en effet si du sulfate ferrique est utilisée dans la solution aqueuse le sel formé est du $Fe_3 (SO_4)_2 (OH)_5$. $2H_2O$ qui donne ensuite une poudre de fer ayant une teneur en soufre excessive pour une utilisation dans une pile thermique.

La forme et la morphologie sous laquelle se présente la poudre du précipité n'est pas précisée.

Dans l'exemple 5, ce document se livre à une étude sur la réduction par l'hydrogène de divers composés à base de fer.

Parmi les douze composés testés en cinquante essais, seuls cinq, à l'issue de la réduction par l'hydrogène, donnent des poudres de fer convenant pour une utilisation dans une pile thermique, c'est-à-dire présentant des propriétés équivalentes à la poudre de fer NX-1000 de PFIZER® (AMETEK®). Ces composés sont outre les précipités déjà cités, divers nitrates et oxydes ferriques.

De l'oxalate ferreux dont la morphologie n'est pas décrite a également été soumis à une réduction par l'hydrogène, dans quatre essais différents, ce composé donne une poudre de fer de structure spongieuse, mais selon les inventeurs, cette poudre de fer préparée à partir d'oxalate ferreux ne convient pas à une utilisation dans une pile thermique et n'est pas analogue à la poudre NX-1000 de PFIZER® (AMETEK®).

Le procédé décrit dans le document US-A-4 414 021, s'il permet apparemment de préparer une poudre de fer répondant aux spécifications indiquées ci-dessus, présente encore de nombreux inconvénients, par exemple, aucune spécification sur la morphologie des « bons » précurseurs n'étant donnée, aucun contrôle de ces derniers ne peut être effectué avant l'étape de réduction, ce qui peut conduire à des résultats aléatoires concernant les propriétés des poudres de fer élaborées selon le procédé du document US-A-4 414 021.

De même, comme on l'a déjà indiqué plus haut, dans le cas plus général de la préparation de poudres métalliques, les poudres métalliques actuellement préparées par les procédés connus donnent, lors de leur pressage, des compacts dont la résistance ou tenue mécanique est nettement insuffisante pour la plupart des applications.

Il existe donc un besoin non satisfait pour un procédé permettant de préparer une poudre métallique donnant par pressage des compacts présentant une tenue ou résistance mécanique améliorée, les autres propriétés d'une telle poudre se situant par ailleurs dans des plages satisfaisantes.

Il existe plus précisément un besoin non satisfait pour un procédé permettant de préparer une poudre de fer répondant au moins aux spécifications indiquées plus haut et qui convienne en particulier comme constituant des compositions chauffantes pyrotechniques.

Il existe en outre un besoin pour un procédé permettant de préparer une telle poudre métallique avec un rendement élevée, ce procédé doit enfin être fiable, reproductible, facile à mettre en oeuvre, comporter un nombre limité d'étape et permettre de préparer en une durée réduite de grandes quantités de poudre métallique, par exemple, de poudre de fer.

L'objet de l'invention est de fournir un procédé de préparation d'une poudre métallique, en particulier d'une poudre de fer, qui remplissent, entre autres, l'ensemble des besoins indiqués ci-dessus pour un tel procédé.

L'objet de l'invention est également de fournir un procédé qui ne présente pas les inconvénients, désavantages et limitations des procédés de l'art antérieur et qui résolve les problèmes posés par ces procédés.

Cet objet, et d'autres encore, sont atteints, conformément à l'invention par un procédé de préparation de poudre de métal ou d'un alliage de métal comprenant les étapes données dans la revendication 1.

Selon une variante du procédé de l'invention, dans la deuxième étape, au lieu de procéder à la réduction de l'oxalate de métal par traitement avec de l'hydrogène gazeux, on réalise la décomposition dudit oxalate, sous air, en un oxyde, puis on effectue la réduction dudit oxyde pour obtenir la poudre de métal ou d'alliage de métal recherchée.

La décomposition sous air est, dans ce cas, généralement réalisée à une température de 250°C à 600°C.

Le métal est choisi de préférence parmi les métaux de transition et les terres rares.

De préférence, le métal est choisi parmi le fer, le cobalt, le nickel,... .

Le procédé selon l'invention convient particulièrement à la préparation de poudres de fer, dans ce cas, l'oxalate de métal est l'oxalate ferreux.

L'hydrogène gazeux peut être de l'hydrogène gazeux pur ou de l'hydrogène gazeux dilué dans un gaz neutre, tel que l'azote.

Du fait de la morphologie spécifique du précurseur oxalique, de sa taille (longueur) spécifique, et, en outre, des conditions de réduction spécifiques, on obtient une poudre de métal répondant aux besoins indiqués ci-dessus, en particulier une poudre de fer qui présente une microstructure spongieuse et filamenteuse qui la rend apte à une utilisation dans une pile thermique.

D'autre part, la poudre de fer préparée par le procédé de l'invention remplit les conditions et spécifications pour une telle poudre de fer, et se montre même supérieure par la plupart de ses caractéristiques et propriétés à la poudre connue commercialisée par la société PFIZER® (AMETEK®) sous la dénomination NX-1000.

De manière générale, les grains de poudres métalliques préparées par le procédé de l'invention ont, de manière surprenante, la propriété de s'assembler sous l'effet d'une pression de compactage en un solide poreux cohérent, présentant une tenue mécanique élevée.

Cette propriété résulte de l'enchevêtrement des grains à structure spongieuse et filamenteuse, caractéristique des poudres objet de la présente invention.

Ainsi, à titre d'exemple, si la tenue mécanique des compacts pressés dans des conditions données, par exemple de 292 MPa, est mesurée, par le test bien connu de « flexion trois points », sur des éprouvettes parallélépipédiques de dimensions normalisées, il est possible d'évaluer l'incidence de la morphologie des grains sur cette caractéristique mécanique.

On peut ainsi montrer, pour des poudres de fer pur, que les éprouvettes issues du pressage de grains sphériques ou polygonaux à surface lisse, rompent à des pressions de 10 à 15 MPa, alors qu'elles peuvent résister à plus de 50 MPa, voire 60 MPa si les grains pressés possèdent la structure spongieuse et filamenteuse, caractéristique de l'invention.

L'oxalate de métal, par exemple, l'oxalate ferreux constitué de grains à morphologie en aiguille de rapport d'acicularité compris entre 4 et 20, et d'une longueur de 5 à 10 µm, est élaboré par mélange d'une solution de sel de métal, par exemple, de sel ferreux et d'une solution d'un composé oxalique, et précipitation de l'oxalate de métal, par exemple, de l'oxalate ferreux à partir dudit mélange.

L'élaboration de l'oxalate de métal, par exemple, de l'oxalate ferreux est ainsi réalisée par une opération de précipitation facile à mettre en oeuvre à partir de produits de départ aisément disponibles et de coût modéré.

Avantageusement, la réduction de l'oxalate de métal, par exemple, de l'oxalate ferreux élaboré, réalisé par traitement avec de l'hydrogène gazeux, est effectuée à une température modérée.

Il s'est avéré qu'une température de 500 à 700°C, de préférence de 520 à 620°C, convenait particulièrement.

L'invention a également pour objet la poudre de métal, en particulier la poudre de fer, constituée de grains spongieux et filamenteux, susceptible d'être obtenue par le procédé décrit plus haut.

Lesdits grains ont, de préférence, une taille comprise entre 10 et 50 µm.

L'invention a encore pour objet à titre de produit nouveau une poudre de fer à microstructure spongieuse et filamenteuse qui présente les propriétés suivantes :

- teneur en fer total : supérieure ou égale à 98 % ;
- teneur en fer élémentaire : supérieure ou égale à 95,7 % ;
- perte à l'hydrogène : inférieure ou égale à 1,30 % ;
- surface spécifique : supérieure ou égale à 0,50 $m^2/g$ ;
- sous granulométrie Fischer: 3,25 à 3,5 µm
- granulométrie obtenue par tamisage :

  - plus de 70 % des particules avec une taille inférieure à 45 µm ;
  - 1 % au moins des particules avec une taille supérieure à 150 µm ;

- tenue du compact brut « Green Force » pour une pression de formage de 276 MPa : supérieure ou égale à 50 MPa selon la norme ASTM B 312-56 T.

La poudre de fer selon l'invention est conforme, et va même largement au-delà des spécifications mentionnées plus haut, et est supérieure à la poudre NX 1000 AMETEK®, notamment pour la teneur en fer élémentaire, la perte à l'hydrogène, et la tenue du compact brut.

La poudre de fer selon l'invention peut être utilisée dans de nombreux domaines de l'industrie.

Selon l'utilisation recherchée, elle peut être utilisée seule, en tant que telle, ou bien elle peut être mélangée à d'autres constituants pour former une composition.

L'invention concerne, en outre, les « compacts » susceptibles d'être obtenus par pressage d'au moins une poudre de métal ou d'alliage selon l'invention.

On a déjà indiqué ci-dessus que ces compacts, du fait de la structure spécifique de la poudre selon l'invention, présentaient des propriétés de tenue mécanique remarquablement améliorées.

Ces compacts sont susceptibles d'être obtenus par pressage d'une seule poudre de métal pur ou d'une poudre d'alliage ou par pressage de plusieurs poudres, chacune de ces poudres étant une poudre de métal pur ou une poudre d'alliage.

Un ou plusieurs composé(s) supplémentaire(s) peut(vent) être, en outre, ajouté(s) à ladite ou auxdites poudre (s) de métal pur ou d'alliage, ce ou ces composé(s) se trouvant ensuite enfermés dans la porosité du compact ; ces composés peuvent être, par exemple, solides ou liquides, parmi ces composés, on peut citer, par exemple, les céramiques, les composés ioniques, les hydrures, les oxydes, les métaux ferromagnétiques, les hydroxydes, les composés organiques liquides aliphatiques ou cycliques.

Le pressage, en vu d'obtenir les compacts selon l'invention, est généralement réalisé à une pression, dite pression de compactage, de 50 à 500 MPa, de préférence, de 100 à 300 MPa.

Toutefois, il a été mis en évidence, selon l'invention, que la résistance mécanique (R) des compacts selon l'invention - qui est déjà beaucoup plus élevée que celle des compacts préparés à partir des poudres de l'art antérieur - pouvait, en outre, être significativement améliorée, en adoptant des pressions de compactage plus élevées, à savoir une pression de compactage de 500 à 1 000 MPa, et/ou en effectuant, en outre, un frittage partiel pendant ou après le pressage.

Ce frittage est, de préférence, un frittage sous atmosphère réductrice, par exemple, une atmosphère constituée d'hydrogène, de monoxyde d'azote, ou d'un mélange hydrogène-azote, ou sous atmosphère neutre, par exemple une atmosphère d'azote, d'un gaz rare, tel que l'argon ou d'un de leurs mélanges.

Le frittage partiel est généralement réalisé à une température modérée, par exemple, de 400 à 600°C, qui ne modifie que très faiblement la porosité des compacts et permet de conserver si nécessaire une porosité, par exemple, supérieure à 30 %, tout en augmentant la valeur de la tenue mécanique.

A titre d'exemple, le pressage à 500 MPa de poudres de fer préparées par le procédé de l'invention donne des compacts dont la résistance mécanique atteint 100 MPa.

Par ailleurs, un compact pour lequel R est égal à 60 MPa voit sa tenue mécanique portée à 220 MPa, après un frittage partiel réalisé à 450°C sous hydrogène pur.

La poudre selon l'invention, et les compacts selon l'invention, trouvent, comme on l'a déjà indiqué plus haut, leurs utilisations dans de nombreux domaines de la technique.

L'invention concerne également l'utilisation des poudres ou des compacts décrits ci-dessus.

L'invention concerne ainsi l'utilisation de la poudre de métal selon l'invention pour préparer des matériaux (ferro)magnétiques doux ou durs, en particulier des filtres utilisant les propriétés ferromagnétiques de un ou plusieurs métaux pour effectuer des séparations ferromagnétiques, ou pour fabriquer des induits de moteurs électriques destinés aux secteurs de l'automobile et de l'électroménager, ou encore des aimants permanents.

Dans ces applications, la poudre de métal est généralement choisie parmi les poudres de métaux ferromagnétiques, tels que fer, cobalt, nickel et de leurs alliages.

L'invention a aussi trait à l'utilisation de la poudre de métal selon l'invention pour préparer des électrodes poreuses, utilisées notamment pour les accumulateurs d'énergie électrique, telles que les piles électrochimiques nickel-cadmium, ou Ni-hydrure de métal.

L'invention concerne également l'utilisation de la poudre de métal selon l'invention pour préparer des supports de catalyseurs, dans lesquels une poudre catalytique est emprisonnée dans la structure métallique poreuse.

L'invention concerne, de manière générale, l'utilisation de la poudre de métal selon l'invention pour préparer des pièces mécaniques de formes complexes, qui peuvent être réalisées par simple pressage, en évitant un recours à des opérations complexes d'usinage.

En d'autres termes, l'invention concerne l'utilisation des poudres de métal selon l'invention dans la métallurgie des poudres.

Une utilisation préférée des poudres de métal selon l'invention et en particulier de la poudre de fer est celle dans les compositions pyrotechniques chauffantes en particulier pour piles thermiques.

L'invention concerne donc également une composition pyrotechnique chauffante comprenant la poudre de fer selon l'invention.

Dans une telle composition, la poudre de fer est généralement associée à un oxydant fort choisi par exemple parmi le perchlorate de potassium, le bioxyde de plomb, l'oxyde de tungstène, l'oxyde de fer, etc., dans une proportion en poids de 80 à 88 % de poudre de fer pour 12 à 20 % d'oxydant.

Dans le cas des compositions pyrotechniques pour piles thermiques l'oxydant est généralement le perchlorate de potassium et les compositions en poids préférées sont généralement les suivantes :

- 84% de poudre de fer et 16% de KClO$_4$ ;
- 83% de poudre de fer et 17% de KClO$_4$.

Afin d'être mise en oeuvre dans une pile thermique cette composition pyrotechnique chauffante est généralement pressée, « pastillée » ou compactée afin d'obtenir des pastilles dont la densité apparente est de préférence de 3,2 à 3,8.

L'invention a également trait à de telles pastilles.

Enfin, l'invention concerne également une pile thermique qui comprend une composition pyrotechnique chauffante pastillée ou des pastilles décrite (s) ci-dessus.

L'invention va maintenant être décrite en détail en faisant référence aux dessins joints.

- La figure 1 représente une vue schématique en coupe verticale d'une pile thermique mettant en oeuvre la composition pyrotechnique chauffante pastillée selon l'invention.
- Les figures 2A à 2C sont des micrographies réalisées au microscope électronique à balayage montrant la microstructure des poudres de fer selon l'invention.
- Les figures 3A à 3C sont des micrographies réalisées au microscope électronique à balayage montrant la microstructure des poudres de fer NX 1000 de l'art antérieur.
- La figure 4 est un graphique qui donne la courbe de décharge typique d'une pile thermique. La tension U (en Volts) est portée en abscisse et le temps t (en secondes) en ordonnée.

De manière détaillée, le procédé selon l'invention comprend dans une première étape l'élaboration d'oxalate de métal, par exemple, d'oxalate ferreux dihydraté constitué de grains à morphologie en aiguille et d'une taille de 5 à 10 μm.

Par taille des grains en aiguille, on entend généralement la mesure de leur plus grande dimension ou « longueur ». Cette longueur est généralement déterminée à partir de mesures statistiques sur les clichés de microscope électronique. Les aiguilles doivent par ailleurs, de manière préférée, présenter un rapport d'acicularité (longueur/diamètre) de 4 à 20, de préférence voisin de 10.

Selon l'invention, les grains d'oxalate de métal, par exemple, d'oxalate ferreux, de préférence, d'oxalate ferreux dihydraté présentant une telle morphologie et une telle taille spécifique sont préparés par précipitation à partir d'une solution obtenue par mélange d'une solution d'un sel de métal, par exemple, d'un sel ferreux et d'une solution d'un composé oxalique.

Le sel de métal, par exemple, le sel ferreux mis en oeuvre est de préférence un chlorure de ce métal, par exemple du chlorure ferreux tétrahydraté FeCl$_2$, 4H$_2$O, mais d'autres sels de métal, par exemple, d'autres sels ferreux pourraient être envisagés par exemple, du sulfate, du sel de Mohr.

La solution de ce sel de métal, par exemple, de sel ferreux est généralement une solution dans un solvant choisi parmi l'eau ; les alcools simples ayant de 1 à 4 atomes de carbone tels que l'éthanol, l'isopropanol, les polyols, par exemple, le glycérol, l'éthylèneglycol, le propanediol-1,2 et leurs mélanges.

Parmi ces mélanges, on peut citer les mélanges eau-éthanol, eau-éthanol-isopropanol ou eau-éthylèneglycol, dans les proportions préférées suivantes eau 50 %, éthanol 50 % ; eau 60 % éthanol 10 %, isopropanol 30 % ou eau 60 %, éthylèneglycol 40 %.

La concentration du sel de métal, par exemple, du sel ferreux est telle que la concentration en sel de métal, par exemple, en sel ferreux dans le mélange soit généralement de 0,5 à 2 mol./l.

Le composé oxalique mis en oeuvre est de préférence un complexe dihydraté de l'acide oxalique de formule H$_2$C$_2$O$_4$, 2H$_2$O mais d'autres composés peuvent également convenir : par exemple, l'oxalate d'ammonium.

La solution de ce composé oxalique est généralement une solution dans un solvant analogue à celui déjà cité ci-dessus.

La concentration du composé oxalique est telle que la concentration en composé oxalique dans le mélange soit généralement de 0,2 à 2 mol./l.

La précipitation est généralement effectuée à une température voisine de la température ambiante, c'est-à-dire généralement entre 15 et 30°C, par exemple, à une température voisine de 20°C.

Après la précipitation proprement dite, l'oxalate de métal, par exemple, l'oxalate ferreux précipité est généralement soumis en outre à des opérations successives de murissement, de séparation, de lavage, de séchage et éventuellement tamisage.

Suite à la précipitation, on procède ainsi généralement à un mûrissement de l'oxalate de métal, par exemple, de l'oxalate ferreux pendant une durée de 0 h 15 à 1 h 00 et à une température voisine de la température ambiante.

Le précipité est ensuite séparé par toute opération de séparation liquide-solide connue comme par exemple par filtration ou par centrifugation.

Le précipité obtenu est ensuite généralement lavé par exemple avec de l'eau déminéralisée.

Le précipité lavé est ensuite généralement séché par exemple par étuvage ou atomisation à une température de 40 à 90°C pour l'amener à une teneur en eau adsorbée voisine de 0.

Cet oxalate de métal, par exemple, . cet oxalate ferreux sec est ensuite éventuellement soumis à une opération de tamisage permettant la désagrégation éventuelle de la poudre, s'il ne présente pas la taille voulue.

L'oxalate de métal, par exemple, l'oxalate ferreux obtenu dans ces conditions présente des grains à morphologie en aiguille et d'une taille (longueur) de 5 à 10 μm.

Il s'agit, par exemple, dans le cas du fer, de $FeC_2O_4$, $2H_2O$.

De nombreux précurseurs oxaliques de morphologies et/ou de taille différentes ont été synthétisés, mais il s'est avéré que, de manière surprenante, les poudres d'oxalate de métal, par exemple, d'oxalate ferreux présentant une morphologie spécifique avec des grains en aiguille, et plus particulièrement une taille (longueur) spécifique de 5 à 10 μm, et un rapport d'acicularité de 4 à 20, étaient susceptibles de donner par réduction une poudre de métal, par exemple, une poudre de fer à microstructure spongieuse et filamenteuse présentant les propriétés voulues.

Ainsi des précurseurs oxaliques, tels que $FeC_2O_4$, $2H_2O$ à morphologie ovoïde, parallélépipédique, octaédrique ou en bâtonnets, se sont avérés donner par réduction des poudres de métal, par exemple, des poudres de fer ne répondant pas aux spécifications.

De même, des précurseurs oxalique à morphologie en aiguilles, mais d'une taille trop éloignée de la plage spécifique selon l'invention, par exemple supérieure à 10 μm, plus précisément de 15 à 20 μm, ou inférieure à 1 μm, ne permettent pas, lors de la réduction, d'obtenir une poudre de métal, par exemple, une poudre de fer adéquate.

La seconde étape du procédé selon l'invention est une réduction thermique par traitement avec de l'hydrogène gazeux de l'oxalate de métal, par exemple, de l'oxalate ferreux obtenu à l'issue de la première étape.

Comme on l'a indiqué plus haut, cette réduction de l'oxalate de métal, par exemple, de l'oxalate ferreux avec de l'hydrogène gazeux est généralement réalisée à une température de 500 à 700°C, de préférence à une température de 520 à 620°C, de préférence encore de 520°C à 580°C. Cette température dépend en particulier du métal considéré.

Une telle température s'est avérée, de manière surprenante, donner les meilleurs résultats notamment quant à la microstructure de la poudre, à l'agglomération des grains de poudre de métal, par exemple, de poudre de fer, et à la teneur en métal, par exemple, en fer élémentaire.

Cette température est maintenue de préférence pendant une durée de 1 à 3 heures, de préférence de 2 heures.

De préférence encore, selon l'invention il a été mis en évidence que les meilleurs résultats notamment quant à la teneur en métal, par exemple, en fer élémentaire, et à la microstructure de la poudre de métal, par exemple, de la poudre de fer, ont été obtenus en observant le cycle thermique suivant lors de la réduction thermique du précurseur oxalique - oxalate de métal, par exemple, oxalate ferreux :

- on observe tout d'abord un premier palier à de 120°C à 150°C pendant 3 à 5 heures, afin de favoriser le départ des molécules d'eau de constitution des oxalates et d'éviter la formation d'une quantité importante de magnétite, à savoir généralement supérieure à 4 %, au cours du traitement thermique de réduction ;
- on effectue ensuite une montée rapide en température jusqu'à la température de réduction indiquée ci-dessus, de préférence de 520°C.

Par montée rapide en température, on entend une montée en température réalisée à une vitesse par exemple de 3 à 5°C/minute.

Cette montée rapide en température permet de faciliter le départ brusque des gaz issus de la décomposition de l'oxalate de métal, par exemple, de l'oxalate ferreux en métal, par exemple, en fer métallique et de favoriser la microstructure spongieuse voulue.

On observe ensuite un deuxième palier à ladite température de réduction pendant une durée de 1 à 3 heures, par exemple de 2 heures.

On effectue ensuite généralement un retour à la température ambiante par refroidissement naturel.

La poudre de métal, par exemple, la poudre de fer obtenue par réduction du précurseur oxalique spécifique, à morphologie en aiguilles de l'invention, dans les conditions de réductions préférées, également spécifiques, de l'invention a conduit à l'obtention d'une poudre de métal, par exemple, d'une poudre de fer formée d'agglomérats de grains dont la taille atteint en général de 10 à 50 μm, de préférence 30 à 50 μm.

Cette poudre facilement compactable est caractérisée par une microstructure spongieuse et filamenteuse.

Cette structure a été mise en évidence par observation au microscope électronique à balayage, par exemple, dans le cas de la poudre de fer, cette poudre de fer a une structure similaire à celle de la poudre de fer NX 1000.

Cette poudre présente en outre les caractéristiques physico-chimiques mentionnées plus haut qui répondent aux spécifications demandées pour une telle poudre de fer et qui vont même largement au delà de celles-ci.

De même, les caractéristiques et propriétés de la poudre selon l'invention sont par ailleurs pour la plupart meilleures que celles mesurées sur la poudre NX 1000.

Comme on l'a déjà mentionné plus haut, la poudre métallique selon l'invention peut être utilisée dans de nombreux domaines de l'industrie, ainsi la poudre de fer selon l'invention convient particulièrement pour la réalisation de compacts ferromagnétiques destinés, par exemple, à la fabrication d'induits de petits moteurs électriques et de pièces métalliques de formes complexes.

Dans cette utilisation, la poudre de fer est simplement mise en forme soit par simple pressage dans une matrice dont la géométrie fixe la forme de la pièce finale, soit par pressage, puis frittage en atmosphère réductrice ou neutre.

Les conditions de mise en forme (pression de compactage, température et temps de frittage) fixent alors les caractéristiques mécaniques de la pièce finale.

En particulier, elles lui confèrent une résistance à la rupture en flexion plus ou moins élevée et un comportement ductile ou fragile ou voisinage du point de rupture.

Lorsque la poudre de fer selon l'invention est utilisée dans une composition pyrotechnique chauffante pour piles thermiques on a vu que la composition est généralement compactée, pressée ou pastillée afin d'obtenir des pastilles de densité généralement de 3,2 à 3,8.

Ce sont ces pastilles qui sont mises en oeuvre dans la pile thermique. De telles pastilles sont obtenues de manière classique à l'aide d'un presse convenant à ce but sous une pression inférieure à celle nécessaire pour obtenir des pastilles ou compacts de densité comparable et de tenue mécanique inférieure avec la poudre NX 1000.

C'est là un des effets et avantages supplémentaires essentiels de la poudre de métal, par exemple, de la poudre de fer selon l'invention et donc notamment des compositions pyrotechniques qui incluent cette poudre, que de pouvoir être facilement compactables.

De plus, les pastilles ou compacts obtenus à partir de la poudre de métal, par exemple, à partir de la poudre de fer selon l'invention, sont de manière surprenante plus souples et plus résistantes à la manipulation que les mêmes pastilles ou compacts obtenus avec les poudres de métal de l'art antérieur, en particulier la poudre de fer NX 1000, les pastilles selon l'invention résistent beaucoup mieux aux chocs que les pastilles à base de poudre de métal de l'art antérieur, par exemple, les pastilles à base de poudre de fer NX 1000.

Autrement dit, les pastilles selon l'invention ont des propriétés de tenue mécanique nettement améliorées par rapport aux pastilles préparées avec les poudres métalliques de l'art antérieur, par exemple, avec la poudre de fer NX 1000.

Les pastilles ou compacts décrits plus hauts comprenant la composition pyrotechnique chauffante selon l'invention sont mis en oeuvre dans une pile thermique.

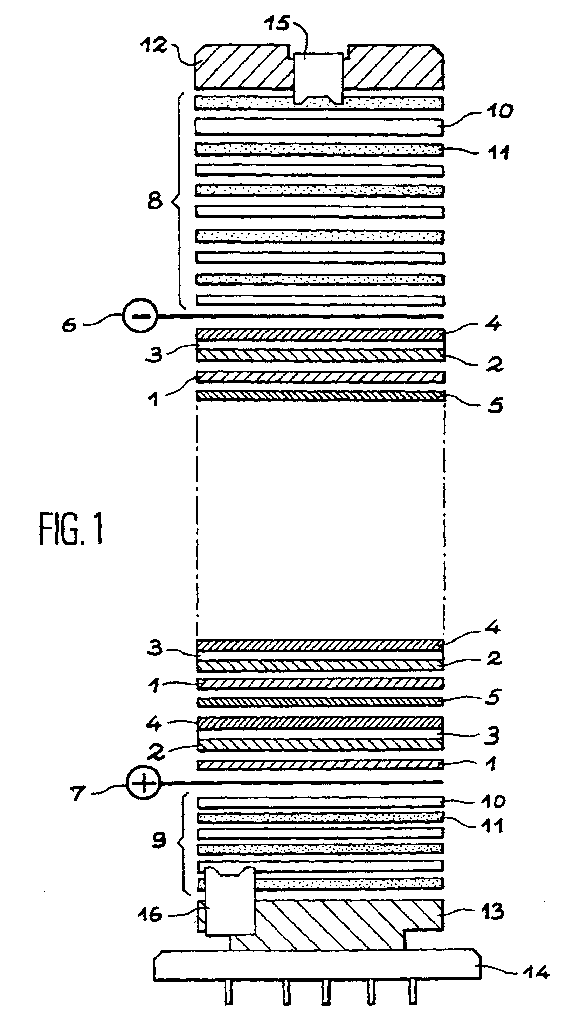

Un exemple de pile thermique dans laquelle peut être mise en oeuvre la composition pyrotechnique chauffante pastillée selon l'invention est décrite schématiquement sur la figure 1.

La pile peut avoir par exemple un diamètre de 34 mm et une longueur de 82 mm, mais d'autres dimensions peuvent être envisagées suivant l'application de la pile thermique.

La pile thermique comprend des éléments actifs empilés dont le nombre est fonction du voltage que l'on souhaite obtenir tandis que hauteur et diamètre définissent l'intensité délivrée par la pile.

Chacun des éléments se compose d'une pastille de composition chauffante (1) d'une cathode (2), d'un électrolyte (3) et d'une anode (4).

La composition chauffante peut par exemple être constituée de 84% de poudre de fer selon l'invention et de 16 % de $KClO_4$.

Chacun des éléments est séparé de l'élément suivant par un séparateur (5) par exemple en acier.

De part et d'autre de l'empilement sont prévus un calage et une garde thermique (8,9) formés par un certain nombre d'éléments (10,11), par exemple en isolant céramique.

L'ensemble formé de l'empilement des éléments actifs est placé entre une cale de fond supérieure (12) et une cale de fond inférieure (14) munie d'un ensemble passe-fils (13), et est maintenu par des brides (15) (16).

L'invention va maintenant être décrite en référence aux exemples suivants, donnés à titre illustratif et non limitatif.

Les exemples 1 à 3 suivants illustrent l'élaboration de compacts à base de poudre de fer métallique.

Exemple 1

a1) Synthèse du précurseur oxalique

On prépare une solution A (1 mol.l$^{-1}$) en mélangeant les éléments suivants :

- FeCl$_2$, 4H$_2$O (> 99 %) : 198,80 g ;
- H$_2$O déminéralisée : 970 ml ;
- HCl 36 % vol. : 30 ml.

On prépare par ailleurs une solution B (0,5 mol.l$^{-1}$) en mélangeant les éléments suivants :

- H$_2$C$_2$O$_4$, 2H$_2$O (> 99 %) : 126,20 g ;
- éthanol 95 % : 1 600 ml ;
- H$_2$O déminéralisée : 390 ml ;
- HCl 36 % vol. : 10 ml.

On ajoute ensuite la solution A dans la solution B à un débit 0,5 l/h.

On effectue la précipitation à température ambiante et on procède au mûrissement du précipité pendant 15 minutes à température ambiante, suivi de la filtration, du lavage à l'eau déminéralisée, et du séchage du précipité entre 50 et 90°C.

b1) Synthèse de la poudre de fer

Après tamisage, sur un tamis de diamètre d'ouverture : 250 μm de l'oxalate ferreux, celui-ci est soumis à un traitement de réduction sous hydrogène pur.

Le cycle thermique utilisé est le suivant :

- montée à 500°C/h de la température ambiante à 120°C ;
- palier de 5 heures à 120°C ;
- montée à 300°C/h de 120°C à 520°C ;
- palier de 2 heures à 520°C ;
- descente à 300°C/h de 520°C à 50°C.

c1) Synthèse du compact métallique

On réalise le compactage uniaxial à froid de la poudre de fer avec une pression de formage de 292 MPa, sous forme de barreaux de 5 à 6 mm d'épaisseur, de 13,3 mm de largeur, et de 32,4 mm de longueur.

La tenue mécanique mesurée par le test de flexion trois points est de 37 MPa, le taux de densification est de 69,7 %.

Exemple 2

a2) Synthèse du précurseur oxalique

On prépare une solution A (1 mol.l$^{-1}$) en mélangeant les éléments suivants :

- FeCl$_2$, 4H$_2$O (> 99 %) : 198,80 g ;
- H$_2$O déminéralisée : 950 ml ;
- HCl 36 % vol. : 50 ml.

On prépare par ailleurs une solution B (1 mol.l$^{-1}$) en mélangeant les éléments suivants :

- H$_2$C$_2$O$_4$, 2H$_2$O (> 99 %) : 126,20 g ;
- éthanol 95 % : 800 ml ;
- H$_2$O déminéralisée : 190 ml ;
- HCl 36 % vol. : 10 ml.

On ajoute ensuite la solution A dans la solution B à un débit de 0,5 l/h.

On effectue la précipitation à température ambiante, et on procède au mûrissement du précipité pendant 15 minutes à température ambiante, suivi de la filtration, du lavage à l'eau déminéralisée, et du séchage du précipité entre 50 et 90°C.

b2) <u>Synthèse de la poudre de fer</u>

Le traitement thermique de réduction effectué sous hydrogène pur sur l'oxalate ferreux, cité dans l'exemple 2, est identique à celui utilisé dans l'exemple 1.

c2) <u>Synthèse du compact métallique</u>

On réalise le compactage uniaxial à froid de la poudre de fer avec une pression de formage de 292 MPa, de la même manière que dans l'exemple 1.

La tenue mécanique mesurée par le test de flexion trois points est de 44 MPa, le taux de densification est de 67,8 %.

<u>Exemple 3</u>

a3) <u>Synthèse du précurseur oxalique</u>

On prépare une solution A (1 mol.l$^{-1}$) en mélangeant les éléments suivants :

- $FeCl_2$, $4H_2O$ (> 99 %) : 198,80 g ;
- éthanol 95 % = 475 ml ;
- $H_2O$ déminéralisée : 475 ml ;
- HCl 36 % vol. : 50 ml.

On prépare par ailleurs une solution B (0,2 mol.l$^{-1}$) en mélangeant les éléments suivants :

- $H_2C_2O_4$, $2H_2O$ (> 99 %) : 126,20 g ;
- éthanol 95 % : 4 950 ml ;
- HCl 36 % vol. : 50 ml.

On ajoute la solution A dans la solution B à un débit de 0,5 l/h.

On effectue la précipitation à température ambiante, puis le mûrissement du précipité pendant 15 minutes à température ambiante, suivi de la filtration, du lavage à l'eau déminéralisée, et du séchage du précipité entre 50 et 90°C.

b3) <u>Synthèse de la poudre de fer</u>

Après tamisage sur un tamis (diamètre d'ouverture : 250 μm) de l'oxalate ferreux, celui-ci est soumis à un traitement de réduction sous hydrogène pur.

Le cycle thermique utilisé est le suivant :

- montée à 500°C/h de la température ambiante à une température $T_1$, telle que 120°C $\leq T_1 \leq$ 150°C ;
- palier de 3 à 5 heures à 120°C $\leq T_1 \leq$ 150°C ;
- montée à 300°C/h de 120°C $\leq T_1 \leq$ 150°C jusqu'à une température $T_2$, telle que 520°C $\leq T_2 \leq$ 620°C ;
- palier de 2 heures à 520°C $\leq T_2 \leq$ 620°C ;
- descente à 300°C/h de 520°C $\leq T_2 \leq$ 620°C jusqu'à 50°C.

c3) <u>Synthèse du compact métallique</u>

On réalise le compactage uniaxial à froid de la poudre de fer avec une pression de formage de 292 MPa.

La tenue mécanique mesurée par le test de flexion trois points est de 60 MPa, et le taux de densification est de 68 %.

L'exemple 4 suivant illustre l'élaboration de compacts à base de poudre de nickel métallique.

<u>Exemple 4</u>

a) <u>Synthèse du précurseur oxalique</u>

On prépare une solution A (0,5 mol.l$^{-1}$) en mélangeant les éléments suivants :

- NiCl$_2$, 6H$_2$O (> 99 %) : 47,50 g ;
- H$_2$O déminéralisée : 400 ml.

On prépare par ailleurs une solution B (0,2 mol.l$^{-1}$) en mélangeant les éléments suivants :

- H$_2$C$_2$O$_4$, 2H$_2$O (> 99 %) : 25,20 g ;
- éthanol 95 % : 250 ml ;
- H$_2$O déminéralisée : 750 ml.

On ajoute la solution A dans la solution B à un débit de 1,6 l/h.
La température du milieu réactionnel est de 90°C.
Le mûrissement du précipité a lieu pendant 5 minutes à 90°C.
On réalise ensuite la filtration, le lavage à l'eau déminéralisée, et le séchage du précipité entre 50 et 90°C.

b) <u>Synthèse de la poudre de nickel</u>

Après tamisage sur un tamis de diamètre d'ouverture : 250 µm, de l'oxalate de nickel, celui-ci est soumis à un traitement de réduction sous hydrogène pur.
Cycle thermique utilisé :

- montée à 500°C/h de la température ambiante à 150°C ;
- palier de 3 heures à 150°C ;
- montée à 300°C/h de 150 à 420°C ;
- palier de 2 heures à 420°C ;
- descente à 300°C/h de 420 jusqu'à 50°C.

c) <u>Synthèse du compact métallique</u>

On réalise le compactage uniaxial à froid de la poudre de nickel à une pression de 292 MPa.
La tenue mécanique mesurée par le test de flexion trois points est de 46 MPa, le taux de densification est de 60,6 %.
L'exemple 5 suivant illustre l'élaboration de compacts à base de poudre de cobalt métallique.

<u>Exemple 5</u>

a) <u>Synthèse du précurseur oxalique</u>

On prépare une solution A (1 mol.l$^{-1}$) en mélangeant les éléments suivants :

- CoCl$_2$, 6H$_2$O (> 99 %) : 237,90 g ;
- éthanol 95 % : 475 ml ;
- H$_2$O déminéralisée : 475 ml ;
- HCl 36 % vol. : 50 ml.

On prépare par ailleurs une solution B (0,2 mol.l$^{-1}$) en mélangeant les éléments suivants :

- H$_2$C$_2$O$_4$, 2H$_2$O (> 99 %) : 126,20 g ;
- éthanol 95 % : 4 950 ml ;
- HCl 36 % vol. : 50 ml.

On ajoute la solution A dans la solution B à un débit de 0,5 l/h.
On effectue la précipitation à température ambiante, puis le mûrissement du précipité pendant 15 min. à température ambiante, puis la filtration, le lavage à l'eau déminéralisée et le séchage du précipité entre 50 et 90°C.

b) <u>Synthèse de la poudre de cobalt</u>

Après tamisage sur un tamis de diamètre d'ouverture 250 µm de l'oxalate de cobalt, celui-ci est soumis à un traitement de réduction sous hydrogène pur.

Cycle thermique utilisé :

- montée à 500°C/h de la température ambiante jusqu'à 150°C ;
- palier de 3 heures à 150°C ;
- montée à 300°C/h de 150 jusqu'à 520°C ;
- palier de 2 heures à 520°C ;
- descente à 300°C/h de 520 jusqu'à 50°C.

c) Synthèse du compact métallique

On réalise le compactage uniaxial à froid de la poudre de cobalt (pression : 292 MPa).
La tenue mécanique, mesurée par la flexion trois points est de 30 MPa, le taux de densification est de 60,2 %.

Exemple 6

Préparation et caractérisation des poudres de fer selon l'invention

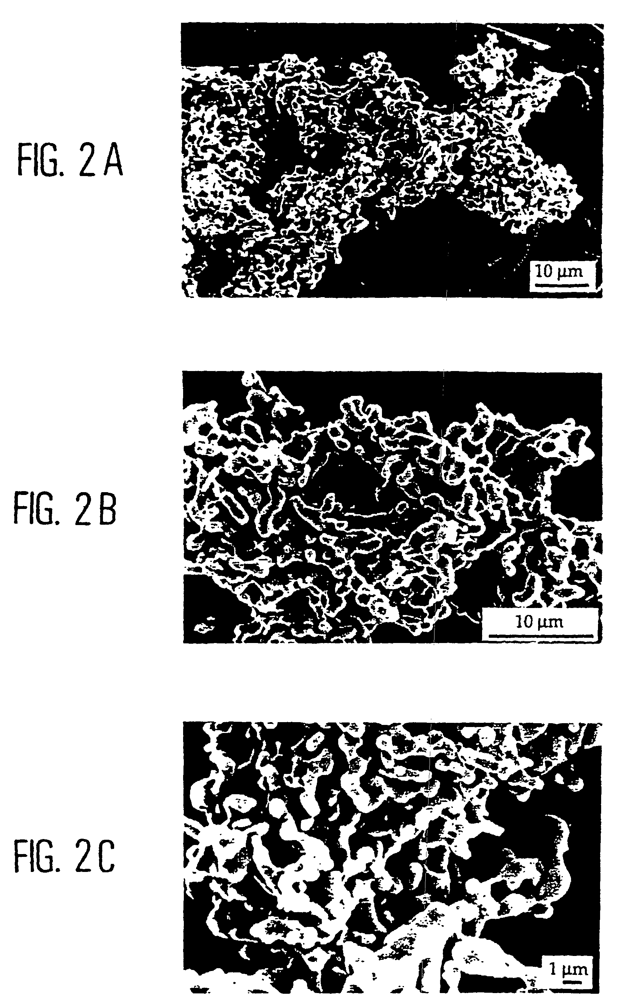

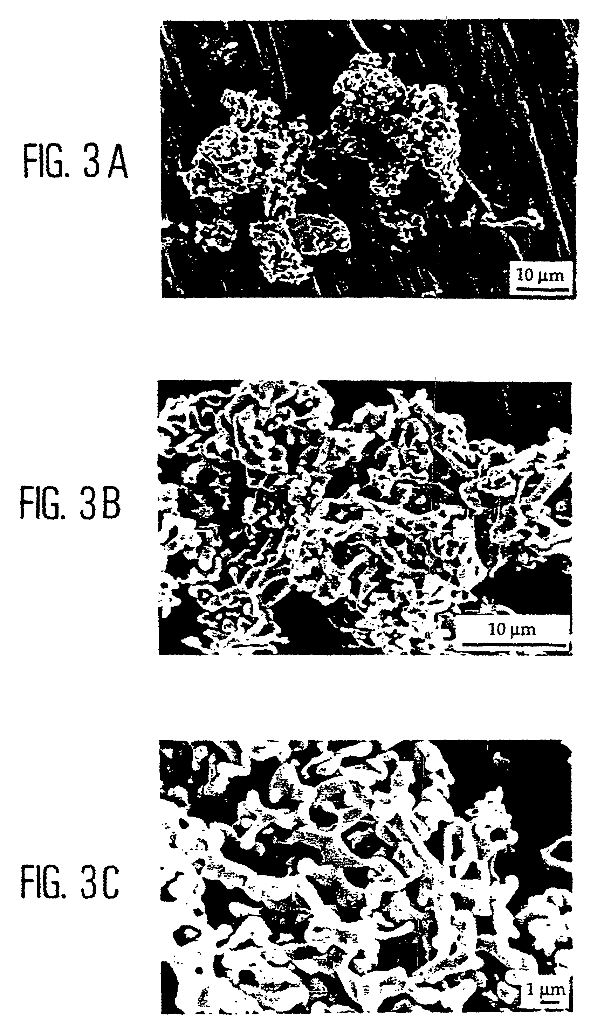

Plusieurs lots de poudre ont été préparés dans les conditions du procédé de l'invention, c'est-à-dire à partir d'un précurseur oxalate ferreux à morphologie en aiguilles, et dont la taille des grains est de 5 à 10 µm, puis par réduction thermique de ce précurseur avec de l'hydrogène gazeux en observant les conditions du cycle thermique préféré décrits plus haut c'est-à-dire palier de 120°C à 150°C durant 3 à 5 heures, montée rapide c'est-à-dire à 5°C/min jusqu'à la température de réduction de 520°C à 620°C et maintien à cette température pendant une durée de 2 heures.
L'observation au microscope électronique à balayage (MEB) des poudres de fer selon l'invention montre une microstructure spongieuse et filamenteuse (micrographies des figures 2A, 2B, 2C) similaire à celle de la poudre de fer NX 1000 de l'art antérieur commercialisée notamment par la société AMETEK® (micrographies des figures 3A, 3B, 3C).
On a ensuite déterminé les grandeurs physiques et chimiques des lots de poudre selon l'invention, et on les a comparés à ces mêmes grandeurs mesurées sur des lots de poudre de fer NX 1000 commercialisés par la société AMETEK®. Les résultats de ces déterminations sont regroupés dans le tableau I.
Les méthodes utilisées pour ces déterminations sont les suivantes :

- la teneur en fer totale a été déterminée par spectroscopie d'émission plasma ;
- la teneur en fer élémentaire a été déterminée par analyse thermogravimétique (ATG) selon l'équation (1) par connaissance du gain de masse lors de l'oxydation sous air de la poudre de fer recouverte d'une couche de magnétite protectrice :

$$(1-a)Fe + aFe_3O_4 + (3/4+1/2a)O_2 \rightarrow (1/2 + a)Fe_2O_3 \tag{1}$$

On peut également utiliser pour déterminer la teneur en fer élémentaire la méthode de l'aimantation à saturation à température ambiante selon l'équation (2) :

$$M_s(poudre\ de\ fer) = (1-a)M_sFe + aM_sFe_3O_4 \tag{2}$$

avec $M_sFe$ = 217,2 µem/g (T ambiante)
et $M_sFe_3O_4$ = 92,3 µem/g (T ambiante)

- la perte en $H_2$ a été déterminée par analyse thermogravimétrique sous $H_2$ ;
- la surface spécifique $S_w(m^2/g)$ qui rend compte de l'état de division de la poudre de fer est déterminée par la méthode BET par mesure du volume gazeux d'azote nécessaire à la formation d'une couche « physisorbée » à la surface de l'échantillon.

La granulométrie a été déterminée de manière classique par un appareil de tamisage automatique.
Les tenues du compact brut (Green force) ont été déterminées selon la norme ASTM B312-56 T et MPIF 15 avec des matrices et supports de flexion usinés à ces normes.
Les tenues du compact brut (Green force) dans le tableau I ont été mesurées sur des barreaux d'épaisseur comprise entre 5,5 et 6,3 mm.

Tableau I

| Poudre de fer | Spécification | NX 1000 (mesures effectuées sur deux lots) | Poudre de l'invention (moyennes effectuées sur 17 lots) |
|---|---|---|---|
| Fer total (%) | > 95 | 99 ($\pm$1) | 98-99 ($\pm$1) |
| Fer élémentaire (%) | > 89 | 92,8 - 96.3 | 95,7 - 98,2<br>moyenne = 97 |
| Perte $H_2$ (%) | < 3 | 1,70 - 2,40 | 0,26 - 1,30 |
| Sw ($m^2$/g) | >0,5 | 0,60 | 0,50 - 0,90<br>moyenne = 0,58 |
| Granulométrie (tamisage) | <44 µm, 70% min<br>>150 µm, 1% max | <45 µm, 70 - 71%<br>> 150 µm, 0,2 - 0,9% | <45 µm, 70,6 - 81 %<br>moyenne = 75,2 %<br>>150 µm, 0,05-1,0%<br>moyenne = 0,19 % |
| Sous granulométrie Fisher (µm) | 1,50 - 3,50 | 3,20 | 3,25 - 3,30 |
| Green force (MPa) $P_c$ = 276 MPa | >35 | 30 | 51 |
| Green force (MPa) $P_c$ = 292 MPa | - | 34-39<br>moyenne = 37 | 51 - 69<br>moyenne = 60 |

Il ressort de ce qui précède, que l'étude au microscope électronique démontre clairement que la microstructure spongieuse et filamenteuse de la poudre de fer selon l'invention est voisine, voire identique, à celle de la poudre NX 1000.

Par ailleurs, les caractéristiques physico-chimiques mesurées sur la poudre selon l'invention démontrent que celles-ci répondent à l'ensemble des exigences requises pour une utilisation dans une composition pyrotechnique chauffante pour pile thermique et vont au delà de celles-ci.

En effet, la teneur en fer total est égale à 98-99 % (ce qui est nettement supérieur aux exigences de la spécification >95 %).

La teneur en fer élémentaire, est comprise entre 95,7 et 98,2 % ce qui est nettement supérieur aux exigences de la spécification (> 89 %) mais aussi à la teneur en fer élémentaire de la poudre NX 1000 qui n'est que de 92,8 à 96,3 %.

Par conséquent, la perte à l'hydrogène, comprise entre 0,26 et 1,30 % est nettement inférieure aux 3% de la spécification et est également inférieure à celle de la poudre NX 1000 qui est de 1,70 à 2,40 %.

La surface spécifique (0,50 à 0,90 $m^2$/g) et la granulométrie déterminée par tamisage (>150 µm : 0,05 à 1 %, < 45 µm : 70,6 à 81 %) sont respectées ; la proportion de particules fines (< 45 µm) étant supérieure à celle de la poudre NX 1000.

Quelle que soit la pression de formage utilisée (276 ou 292 MPa), la tenue du compact brut S de la poudre de fer selon l'invention est supérieure à celle de la poudre NX1000. Ainsi S = 51 à 69 MPa pour la poudre de l'invention et S = 34 à 39 MPa pour la poudre NX 1000 à Pc = 292 MPa.

Ces résultats sont reproductibles quel que soit le lot de poudre de fer élaboré selon l'invention.

Exemple 7

Préparation et essais des compositions chauffantes pyrotechniques.

a) Préparation

On a préparé à des fins de comparaison deux compositions chauffantes pyrotechniques comprenant 84 % de poudre de fer et 16 % de perchlorate de potassium. La première composition comprend de la poudre de fer NX 1000 et la seconde composition comprend la poudre de fer selon l'invention.

b) Essai calorimétrique

Les deux compositions ont été testées en calorimétrie les résultats obtenus sont regroupés dans le tableau II suivant :

Tableau II

| Composition | essai 1 (cal/g) | essai 2 (cal/g) | essai 3 (cal/g) | Moyenne (cal/g) |
|---|---|---|---|---|
| Composition avec poudre de fer NX 1000 | 289 | 290 | 290 | 290 |
| Composition avec poudre de fer selon l'invention | 290 | 291 | 290 | 290 |

La précision de la mesure est meilleure que 1 %.

Il s'avère donc que les 2 compositions sont identiques d'un point de vue calorimétrique.

c) Essais de pastillage-compactage

On réalise ensuite des essais de pastillage avec les deux compositions décrites ci-dessus.

Afin qu'elle soit représentative du matériau, il a été pris une densité de référence pour les 2 pastilles préparées à partir de chacune des 2 compositions. Cette densité est de 3,5.

Le test a été effectué sur des diamètres de 36 mm et 100 mm. La principale observation a été l'obtention de pastilles à base de poudre selon l'invention plus souples et résistantes à la manipulation, autrement dit les pastilles à base de poudre selon l'invention résistent mieux aux chocs que les pastilles à base de poudre NX 1000.

Les rapports de pression déterminés sur un diamètre de 36 mm ont été retrouvés sur diamètre 100 mm :

- pour le mélange comprenant la poudre NX 1000, 94 tonnes ont été nécessaires pour obtenir une densité de 3,47 ;
- pour le mélange comprenant la poudre selon l'invention seulement 80 tonnes ont été appliquées pour obtenir une densité de 3,47.

Le rapport de pression s'établit donc à 1,175.

La tenue mécanique des pastilles produites appelle les mêmes remarques que ci-dessus quant à la supériorité des pastilles incluant la poudre de fer selon l'invention.

d) Mesure de la vitesse de combustion

La vitesse de combustion est mesurée selon la méthode dite des fils coupés:

La pastille placée entre 2 plaques de compression est percée en 2 points distants de 70 mm ; 2 fils sont passés au travers de ces trous.

Lors de la mise à feu de la composition chauffante une carte électronique enregistre les dates des coupures des fils.

Les résultats obtenus respectivement par le mélange chauffant comprenant la poudre NX 1000 (mélange AMETEK®) et pour le mélange chauffant selon l'invention comprenant la poudre de fer selon l'invention, sont regroupés dans les tableaux III et IV

Tableau III

| N° pastille | 1 | 2 | 3 | 4 | 5 |
|---|---|---|---|---|---|
| Vitesse (mm/s) | 95 | 96 | 95 | 97 | 96 |
| moyenne ; 96 mm/s étendue : 2 mm/s | | | | | |

Tableau IV

| N° pastille | 1 | 2 | 3 | 4 | 5 |
|---|---|---|---|---|---|
| Vitesse (mm/s) | 104 | 104 | 106 | 103 | 103 |
| moyenne ; 104 mm/s étendue : 3 mm/s | | | | | |

On enregistre donc une vitesse supérieure pour les pastilles selon l'invention de près de 10 %.

Par ailleurs, les scories des pastilles réalisées avec le mélange selon l'invention gardent la même supériorité de tenue mécanique vis-à-vis des pastilles à base de poudre NX 1000 ; les pastilles restent souples et la tenue à la fracture meilleure.

Ces observations montrent que la meilleure tenue au compact de la poudre de fer selon l'invention se retrouve tout au long de la chaîne d'utilisation de produit.

Exemple 8

Essais de piles thermique

On réalise des tirs de pile qui comprennent soit un mélange pyrotechnique préparé avec de la poudre de fer selon l'invention et du perchlorate de potassium dans les proportions 84/16 soit un mélange pyrotechnique dit mélange STANDARD comprenant une poudre de fer NX 1000 de la société AMETEK® et du perchlorate de potassium dans les mêmes proportions (84/16).

Cette poudre est pressée ou pastillée afin d'obtenir des pastilles d'une densité mesurée de 3,5.

Ces pastilles sont incluses dans les éléments actifs d'une pile thermique telle que celle représentée sur la figure 1. La pile choisie pour les essais a un diamètre de 34 mm et une longueur de 82 mm, il s'agit d'une pile courante de définition qualifiée, et en production.

On a réalisé au total 14 piles.

Quatre des piles ont été réalisées avec le mélange pyrotechnique chauffant STANDARD comprenant la poudre de fer NX 1000.

Les dix autres piles ont été réalisées avec le mélange pyrotechnique chauffant selon l'invention.

Les 14 piles ont été réalisées exactement de la même manière et comprennent exactement les mêmes composants.

Seule la poudre de fer mise en oeuvre les distingue.

L'objectif premier des tests réalisés est de vérifier le bon allumage à froid des compositions chauffantes selon l'invention, c'est-à-dire une performance à froid conforme et un allumage non erratique et reproductible. Afin de mieux tester ce paramètre toutes ces piles ont été tirées à une température froide plus contraignante que celles appliquées habituellement, à savoir -60°C au lieu de - 40°C.

En effet, il est clair que si l'on craint un allumage erratique une baisse de la température de stabilisation avant tir révélera d'autant mieux les problèmes.

La spécification relative à la décharge consiste en une décharge continue dans une résistance.

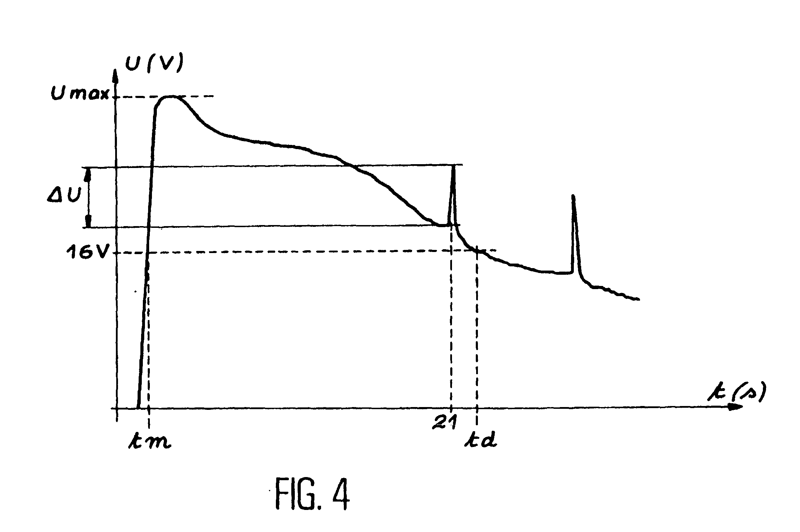

Les paramètres relevés lors des essais sont résumés sur le graphique de la figure 4 qui donne la courbe de décharge typique d'une pile thermique où la tension U (volts) est portée en fonction du temps t (secondes).

Les paramètres sont les suivantes :

- temps de montée à 16 V (ou temps d'amorçage) : $t_m(s)$
- tension maximale : $U_{max}$ (V)
- temps de descente à 16 V: $t_d$ (s)
- Résistance interne à 21 s : $Ri(\Omega)$

La résistance interne Ri ($\Omega$) à 21 s lors de l'ouverture du circuit est déterminée par $\Delta U = R\Delta I$ (voir figure 4).

Les résultats obtenus avec les piles selon l'invention (1-10) et les piles comprenant le mélange « standard » (11-14) sont regroupés dans le tableau V suivant :

| N° pile | $t_m$ | $U_{max}$ (V) | $t_d$ (s) | $Ri(\Omega)$ |
|---------|-------|---------------|-----------|--------------|
| 1 | 0,317 | 20,85 | 21,6 | 0,77 |
| 2 | 0,253 | 20,84 | 21,7 | 0,76 |
| 3 | 0,271 | 20,83 | 21,4 | 0,82 |
| 4 | 0,255 | 20,94 | 23,2 | 0,56 |
| 5 | 0,264 | 20,84 | 23 | 0,57 |
| 6 | 0,284 | 20,64 | 20 | 0,99 |
| 7 | 0,257 | 20,96 | 22,9 | 0,59 |

(suite)

| N° pile | $t_m$ | $U_{max}$ (V) | $t_d$ (s) | Ri($\Omega$) |
|---------|-------|---------------|-----------|--------------|
| 8 | 0,268 | 20,91 | 23,1 | 0,57 |
| 9 | 0,3 | 20,62 | 20,6 | 0,88 |
| 10 | 0,257 | 20,01 | 23,4 | 0,54 |
| 11 | 0,252 | 20,76 | 23,8 | 0,58 |
| 12 | 0,245 | 20,95 | 24 | 0,48 |
| 13 | 0,242 | 21,01 | 25,5 | 0,4 |
| 14 | 0,25 | 20,23 | 24,7 | 0,53 |

Analyse des résultats

Temps d'amorçage (temps de montée à 16 V)

Ceux-ci sont identiques. Il n'y. a eu aucun départ erratique, la montée en tension se déroule de façon satisfaisante et les dispersions observées ne sont pas significatives.

Résistance interne à 21 secondes

Les résultats sont plus dispersés.

Tension maximum

Les dispersions sont plutôt faibles (<4%) et non significatives entre les piles « Standard » (11 à 14) et les piles selon l'invention (1 à 10).

Temps de descente à 16V

La dispersion apparaît à nouveau et est reliée aux valeurs de résistance interne.

En conclusion, les faibles écarts rencontrés pour le temps d'amorçage et la tension maximale montrent que la combustion des compositions chauffantes se fait de façon identique.

En ce qui concerne la dispersion des valeurs de temps de descente à 16 V, et de résistance interne à 21 s, la cause de ces résultats semble imputable aux paramètres de fabrication et plus précisément à la masse effective des pastilles chauffantes, plus dispersée pour les pastilles selon l'invention.

Cela montre la caractère très relatif de la dispersion observée, pour le temps de descente et la résistance interne, d'autant plus que pour une conception de pile développée pour une durée de 20 secondes à -10 °C, toutes les piles testées seraient conformes à -60°C.

L'ensemble des résultats concernant les essais des piles sont extrêmement satisfaisants et démontrent que les piles dites STANDARD réalisées avec le mélange pyrotechnique AMETEK® sont comparables à celles de l'invention.

**Revendications**

1. Procédé de préparation de poudre de métal ou d'un alliage de métal, ledit procédé comprenant les étapes suivantes :

   - élaboration d'oxalate simple ou mixte d'un ou plusieurs métal (métaux), constitué de grains à morphologie en aiguille, de rapport d'acicularité moyen (longueur/diamètre) de 4 à 20, et d'une longueur de 5 à 10 $\mu$m, par mélange d'une solution de sel de métal et d'une solution d'un composé oxalique, et précipitation de l'oxalate de métal à partir de ce mélange ;
   - réduction dudit oxalate de métal par traitement avec de l'hydrogène gazeux à une température de 500 à 700°C ; ou bien,

- décomposition dudit oxalate, sous air, en un oxyde, puis réduction dudit oxyde.

2. Procédé selon la revendication 1, dans lequel ledit métal est choisi parmi les métaux de transition et les terres rares.

3. Procédé selon la revendication 2, dans lequel ledit métal est choisi parmi le fer, le cobalt et le nickel.

4. Procédé selon la revendication 1, dans lequel ledit oxalate de métal est l'oxalate ferreux.

5. Procédé selon la revendication 1, dans lequel ledit sel de métal est un chlorure dudit métal.

6. Procédé selon la revendication 5, dans lequel ledit sel de métal est le chlorure ferreux tétrahydraté $FeCl_2$, $4H_2O$.

7. Procédé selon la revendication 1, dans lequel ledit sel de métal est un sulfate.

8. Procédé selon la revendication 7, dans lequel ledit sel de métal est le sulfate ferreux.

9. Procédé selon l'une quelconque des revendications 1 à 8, dans lequel la concentration en sel de métal dans le mélange est de 0,5 à 2 mol./l.

10. Procédé selon l'une quelconque des revendications 1 à 9, dans lequel la solution de sel de métal est une solution dans un solvant choisi parmi l'eau ; les alcools simples ayant de 1 à 4 atomes de carbone, tels que l'éthanol, l'isopropanol ; les polyols, tels que le glycérol, l'éthylèneglycol, le propanediol-1,2 ; et leurs mélanges.

11. Procédé selon l'une quelconque des revendications 1 à 10, dans lequel ledit composé oxalique est un complexe dihydraté de l'acide oxalique de formule $H_2C_2O_4$, $2H_2O$.

12. Procédé selon l'une quelconque des revendications 1 à 11, dans lequel la concentration en composé oxalique dans ledit mélange est de 0,2 à 2 mol./l.

13. Procédé selon l'une quelconque des revendications 1 à 12, dans lequel la solution de composé oxalique est une solution dans un solvant choisi parmi l'eau ; les alcools ayant de 1 à 4 atomes de carbone, tels que l'éthanol, l'isopropanol ; les polyols, tels que le glycérol, l'éthylèneglycol, le propanediol-1,2 ; et leurs mélanges.

14. Procédé selon l'une quelconque des revendications 1 à 13, dans lequel la précipitation est effectuée à une température au voisinage de la température ambiante, entre 15 et 30°C.

15. Procédé selon l'une quelconque des revendications 1 à 14, dans lequel, après la précipitation l'oxalate ferreux précipité est soumis en outre à des opérations successives de murissement, de séparation, de lavage, de séchage et éventuellement de tamisage.

16. Procédé selon la revendication 1, dans lequel ladite réduction est réalisée à une température de 520 à 620°C pendant une durée de 1 à 3 heures.

17. Procédé selon la revendication 1, dans lequel ladite réduction est réalisée à une température de 520°C à 580°C.

18. Procédé selon l'une quelconque des revendications 1 à 17, dans lequel la réduction est réalisée suivant le cycle thermique suivant :

- on observe un premier palier entre 120°C et 150°C pendant 3 à 5 heures ;
- on effectue une montée rapide en température jusqu'à la température de réduction ;
- on observe un deuxième palier à ladite température de réduction pendant une durée de 1 à 3 heures.

19. Procédé selon la revendication 18, dans lequel la température de réduction est de 520°C et le deuxième palier est d'une durée de 2 heures.

20. Procédé selon la revendication 1, dans lequel la décomposition de l'oxalate, sous air, est réalisée à une température de 250 à 600°C.

21. Poudre de métal ou d'alliage de métal, constituée de grains spongieux et filamenteux susceptible d'être obtenue par le procédé selon l'une quelconque des revendication 1 à 20.

22. Poudre selon la revendication 21, dans laquelle lesdits grains ont une taille comprise entre 10 et 50 µm.

23. Poudre de fer à microstructure spongieuse et filamenteuse présentant les propriétés suivantes :

   - teneur en fer total : supérieure ou égale à 98 % ;
   - teneur en fer élémentaire : supérieure ou égale à 95,7 % ;
   - perte à l'hydrogène : inférieure ou égale à 1,3 % ;
   - surface spécifique : supérieure ou égale à 0, 50 m$^2$/g ;
   - sous granulométrie Fischer: 3,25 à 3,5 µm ;
   - granulométrie obtenue par tamisage :

      - plus de 70 % des particules avec une taille inférieure à 45 µm ;
      - 1 % au moins des particules avec une taille supérieure à 150 µm ;
      - tenue du compact brut « Green Force » pour une pression de formage de 276 Mpa : supérieure ou égale à 50 Mpa, déterminée selon la norme ASTM B312-56T.

24. Compact susceptible d'être obtenu par pressage d'au moins une poudre de métal ou d'alliage selon l'une quelconque des revendications 21 à 23.

25. Compact selon la revendication 24, dans lequel un ou plusieurs composé(s) supplémentaire(s) est(sont) ajouté (s) à ladite au moins une poudre de métal ou d'alliage.

26. Compact selon la revendication 25, dans lequel le ou lesdits composé(s) est(sont) choisi(s) parmi les céramiques, les composés ioniques, les hydrures, les métaux ferromagnétiques, les hydroxydes, les oxydes, les composés organiques liquides aliphatiques ou cycliques.

27. Compact selon la revendication 24, dans lequel ledit pressage est réalisé à une pression de compactage de 50 à 500 MPa.

28. Compact selon la revendication 24, dans lequel ledit pressage est réalisé à une pression de compactage de 500 à 1 000 MPa.

29. Compact selon l'une quelconque des revendications 24 à 28, dans lequel on effectue, en outre, un frittage partiel pendant ou après le pressage.

30. Compact selon la revendication 29, dans lequel ledit frittage partiel est réalisé sous atmosphère réductrice ou neutre.

31. Compact selon l'une quelconque des revendications 29 et 30, dans lequel ledit frittage est réalisé à une température de 400 à 600°C.

32. Utilisation de la poudre de métal selon l'une quelconque des revendications 21 à 23 dans la préparation de matériaux magnétiques doux ou durs.

33. Utilisation selon la revendication 32, dans lequel la poudre de métal est choisie parmi les poudres de métaux ferromagnétiques, tels que fer, cobalt, nickel, et leurs alliages.

34. Utilisation de la poudre de métal selon l'une quelconque des revendications 21 à 23 pour préparer des électrodes poreuses.

35. Utilisation de la poudre de métal selon l'une quelconque des revendications 21 à 23 pour préparer des supports de catalyseur.

36. Utilisation de la poudre de métal fondu selon l'une quelconque des revendications 21 à 23 pour préparer des pièces métalliques de forme complexe par pressage.

**37.** Utilisation de la poudre de métal selon l'une quelconque des revendications 21 à 23 dans la métallurgie des poudres.

**38.** Utilisation de la poudre de métal selon l'une quelconque des revendications 21 à 23 dans les compositions pyrotechniques.

**39.** Matériau (ferro)magnétique doux ou dur comprenant le compact selon l'une quelconque des revendications 24 à 31.

**40.** Electrode poreuse comprenant le compact selon l'une quelconque des revendications 24 à 31.

**41.** Support de catalyseur comprenant le compact selon l'une quelconque des revendications 24 à 31.

**42.** Pièce mécanique comprenant le compact selon l'une quelconque des revendications 24 à 31.

**43.** Composition pyrotechnique chauffante, comprenant la poudre de fer selon l'une quelconque des revendications 21 à 23.

**44.** Composition pyrotechnique chauffante selon la revendication 43, comprenant en outre un oxydant fort choisi parmi le perchlorate de potassium, le bioxyde de plomb, l'oxyde de tungstène, et l'oxyde de fer, dans une proportion en poids de 80 à 88 % de poudre de fer pour 12 à 20 % d'oxydant.

**45.** Composition pyrotechnique chauffante selon la revendication 43, composée en poids de 84% de poudre de fer et de 16 % de perchlorate de potassium.

**46.** Pastille de composition pyrotechnique chauffante selon l'une quelconque des revendications 43 à 45, qui a une densité apparente de 3,2 à 3,8.

**47.** Pile thermique comprenant des pastilles selon la revendications 46.

**48.** Utilisation de la poudre de fer selon l'une quelconque des revendications 21 à 23 dans les piles thermiques.


**Claims**

**1.** Method of preparing a metal or metal alloy powder, said method comprising the following steps:

- development of a simple or mixed oxalate of one or more metals, made up of particles with needle-like morphology, with a mean acicularity ratio (length/diameter) of from 4 to 20, and a length of from 5 to 10 $\mu$m;
- reduction of said metal oxalate by treatment with gaseous hydrogen; or
- decomposition of said oxalate, in air, to an oxide and then reduction of said oxide.

**2.** Method according to claim 1, in which said metal is chosen from among the transition metals and the rare earths.

**3.** Method according to claim 2, in which said metal is chosen from among iron, cobalt and nickel.

**4.** Method according to claim 1, in which said metal oxalate is ferrous oxalate.

**5.** Method according to claim 1, in which said metal salt is a chloride of said metal.

**6.** Method according to claim 5, in which said metal salt is ferrous chloride tetrahydrate $FeCl_2$, $4H_2O$.

**7.** Method according to claim 1, in which said metal salt is a sulphate.

**8.** Method according to claim 7, in which said metal salt is ferrous sulphate.

**9.** Method according to any one of the claims 1 to 8, in which the concentration of metal salt in the mixture is from 0.5 to 2 mol./l.

10. Method according to any one of the claims 1 to 9, in which the solution of metal salt is a solution in a solvent chosen from among water, simple alcohols having from 1 to 4 carbon atoms such as ethanol and isopropanol, polyols, for example, glycerol, ethylene glycol and propane-1,2-diol and their mixtures.

11. Method according to any one of the claims 1 to 10, in which said oxalic compound is a dihydrate complex of oxalic acid of formula $H_2C_2O_4$, $2H_2O$.

12. Method according to any one of the claims 1 to 11, in which the concentration of the oxalic compound in said mixture is from 0.2 to 2 mol./l.

13. Method according to any one of the claims 1 to 12, in which the solution of the oxalic compound is a solution in a solvent chosen from among water, simple alcohols having from 1 to 4 carbon atoms such as ethanol and isopropanol, polyols, for example, glycerol, ethylene glycol and propane-1,2-diol and their mixtures.

14. Method according to any one of the claims 1 to 13, in which the precipitation is carried out at a temperature close to ambient temperature, between 15 and 30°C.

15. Method according to any one of the claims 1 to 14, in which, after the precipitation, the precipitated ferrous oxalate is additionally subjected to successive operations of maturation, separation, washing, drying and possibly sieving.

16. Method according to claim 1, in which said reduction is carried out at a temperature of from 520 to 620°C for a period of from 1 to 3 hours.

17. Method according to claim 1, in which said reduction is carried out at a temperature of from 520 to 580°C.

18. Method according to any one of the claims 1 to 17, in which the reduction is carried out in accordance with the following thermal cycle:

- a first temperature level of from 120°C to 150°C is held for a period of 3 to 5 hours,
- a rapid increase in temperature is brought about up to the reducing temperature,
- a second temperature level, at said reducing temperature is held for a period of from 1 to 3 hours.

19. Method according to claim 18, in which the reducing temperature is 520°C and the second temperature level is held for a period of 2 hours.

20. Method according to claim 1, in which the decomposition of the oxalate, in air, is carried out at a temperature of from 250 to 600°C.

21. Method or metal alloy powder made up of spongy and filament-like particles capable of being obtained by the method according to any one of the claims 1 to 20.

22. Powder according to claim 21, in which said particles have a size between 10 and 50 µm.

23. Iron powder with a spongy and filament-like microstructure having the following properties:

- total iron content: greater than or equal to 98%;
- elemental iron content: greater than or equal to 95.7%;
- loss to hydrogen: less than or equal to 1.3%;
- specific surface: greater than or equal to 0.50 m²/g;
- sub Fischer granulometry: 3.25 to 3.5 µm;
- granulometry obtained by sieving

  - more than 70% of particles having a size less than 45 µm;
  - less than 1% of particles with a size greater than 150 µm;

- Green force (resistance of the raw compact) for a forming pressure of 276 MPa: greater or equal to 50 MPa, determined according to ASTM standard B312-56T.

24. Compact capable of being obtained by pressing of at least one metal or alloy powder according to any one of the claims 21 to 23.

25. Compact according to claim 24, in which one or more supplementary compounds are added to said at least one metal or alloy powder.

26. Compact according to claim 25, in which one or more said compounds are chosen from among ceramics, ionic compounds, hydrides, oxides, ferro-magnetic metals, hydroxides, aliphatic or cyclic organic liquid compounds.

27. Compact according to claim 24, in which said pressing is carried out at a compaction pressure of from 50 to 500 MPa.

28. Compact according to claim 24, in which said pressing is carried out at a compaction pressure of from 500 to 1000 MPa.

29. Compact according to any one of the claims 24 to 28, in which additionally a partial sintering is carried out during or after the pressing.

30. Compact according to claim 29, in which said partial sintering is carried out under a reducing or neutral atmosphere.

31. Compact according to either of the claims 29 and 30, in which said sintering is carried out at a temperature of from 400 to 600°C.

32. Use of the metal powder according to any one of the claims 21 to 23, in the preparation of soft or hard magnetic materials.

33. Use according to claim 32, in which the metal powder is chosen from among ferro-magnetic metal powders, such as iron, cobalt, nickel and their mixtures.

34. Use of the metal powder according to any one of the claims 21 to 23 to prepare porous electrodes.

35. Use of the metal powder according to any one of the claims 21 to 23 to prepare catalyst supports.

36. Use of the molten metal powder according to any one of the claims 21 to 23 to prepare mechanical components of complex shape by pressing.

37. Use of the metal powder according to any one of the claims 21 to 23 in powder metallurgy.

38. Use of the metal powder according to any one of the claims 21 to 23 in pyrotechnic compositions.

39. Soft or hard (ferro)-magnetic material comprising the compact according to any one of the claims 24 to 31.

40. Porous electrode comprising the compact according to any one of the claims 24 to 31.

41. Catalyst support comprising the compact according to any one of the claims 24 to 31.

42. Mechanical component comprising the compact according to any one of the claims 24 to 31.

43. Heating pyrotechnic composition comprising the iron powder according to any one of the claims 21 to 23.

44. Heating pyrotechnic composition according to claim 43, comprising, in addition, a powerful oxidizing agent chosen from among potassium perchlorate, lead dioxide, tungsten oxide and iron oxide in a proportion by weight of from 80 to 88% of iron powder to 12 to 20% of oxidizing agent.

45. Heating pyrotechnic composition according to claim 43, made up of 84% by weight of iron powder and 16% by weight of potassium perchlorate.

46. Tablet of a heating pyrotechnic composition according to any one of the claims 43 to 45 which has an apparent density of from 3.2 to 3.8.

**47.** Thermo-pile comprising tablets according to claim 46.

**48.** Use of the iron powder according to any one of the claims 21 to 23 in thermo-piles.

**Patentansprüche**

**1.** Verfahren zur Herstellung von Metallpulver oder von Pulver einer Metalllegierung, wobei das Verfahren die folgenden Stufen umfasst:

- Herstellung eines einfachen oder gemischten Oxalats eines Metalls oder mehrerer Metalle, das aus Körnern mit nadelförmiger Morphologie, einem mittleren Nadelförmigkeitsverhältnis (Länge/Durchmesser) von 4 bis 20 und einer Länge von 5 bis 10 µm besteht, durch Vermischen einer Lösung eines Metallsalzes und einer Lösung einer Oxalsäureverbindung und Präzipitation des Metalloxalats aus diesem Gemisch;
  Reduktion des Metalloxalats durch Behandlung mit Wasserstoffgas bei einer Temperatur von 500 bis 700°C; oder auch
- Zersetzung des Oxalats unter Luft zu einem Oxid, danach Reduktion des Oxids.

**2.** Verfahren nach Anspruch 1, in dem das Metall unter den Übergangsmetallen und den Seltenerden ausgewählt wird.

**3.** Verfahren nach Anspruch 2, wobei das Metall unter Eisen, Kobalt und Nickel ausgewählt wird.

**4.** Verfahren nach Anspruch 1, wobei das Metalloxalat Eisen(II)-Oxalat ist.

**5.** Verfahren nach Anspruch 1, wobei das Metallsalz ein Chlorid des Metalls ist.

**6.** Verfahren nach Anspruch 5, wobei das Metallsalz Eisen(II)-Chlorid-Tetrahydrat, $FeCl_2 . 4H_2O$, ist.

**7.** Verfahren nach Anspruch 1, wobei das Metallsalz ein Sulfat ist.

**8.** Verfahren nach Anspruch 7, wobei das Metallsalz Eisen(II)-Sulfat ist.

**9.** Verfahren nach einem der Ansprüche 1 bis 8, wobei die Konzentration an Metallsalz im Gemisch 0,5 bis 2 Mol/l beträgt.

**10.** Verfahren nach einem der Ansprüche 1 bis 9, wobei die Lösung eines Metallsalzes eines Lösung in einem Lösungsmittel ist, das unter Wasser, einfachen Alkoholen mit 1 bis 4 Kohlenstoffatomen, wie zum Beispiel Ethanol, Isopropanol, Polyolen, zum Beispiel Glycerin, Ethylenglycol, 1,2-Propandiol und ihren Gemischen ausgewählt ist.

**11.** Verfahren nach einem der Ansprüche 1 bis 10, wobei die Oxalsäureverbindung ein Oxalsäure-Dihydrat-Komplex der Formel $H_2C_2O_4 . 2H_2O$ ist.

**12.** Verfahren nach einem der Ansprüche 1 bis 11, wobei die Konzentration an Oxalsäureverbindung im Gemisch 0,2 bis 2 Mol/l ist.

**13.** Verfahren nach einem der Ansprüche 1 bis 12, wobei die Lösung der Oxalsäureverbindung eine Lösung in einem Lösungsmittel ist, das aus Wasser; Alkoholen mit 1 bis 4 Kohlenstoffatomen, zum Beispiel Ethanol, Isopropanol; Polyolen, zum Beispiel Glycerin, Ethylenglycol, 1,2-Propandiol und ihren Gemischen ausgewählt ist.

**14.** Verfahren nach einem der Ansprüche 1 bis 13, wobei die Präzipitation bei einer Temperatur in der Nachbarschaft von Umgebungstemperatur, zwischen 15 und 30°C, durchgeführt wird.

**15.** Verfahren nach einem der Ansprüche 1 bis 14, wobei das präzipitierte Eisen(II)-Oxalat nach der Präzipitation außerdem aufeinanderfolgenden Arbeitsgängen der Reifung, der Abtrennung, des Waschens, der Trocknung und gegebenenfalls des Siebens unterworfen wird.

16. Verfahren nach Anspruch 1, wobei die Reduktion bei einer Temperatur von 520 bis 620°C während einer Dauer von 1 bis 3 Stunden durchgeführt wird.

17. Verfahren nach Anspruch 1, wobei die Reduktion bei einer Temperatur von 520 bis 580°C durchgeführt wird.

18. Verfahren nach einem der Ansprüche 1 bis 17, wobei die Reduktion nach dem folgenden thermischen Duktus durchgeführt wird:

   - man beobachtet einen ersten Teilschritt zwischen 120°C und 150°C während 3 bis 5 Stunden;
   - man führt eine schnelle Temperaturerhöhung bis zur Reduktionstemperatur durch;
   - man beobachtet einen zweiten Teilschritt bei der Reduktionstemperatur während einer Dauer von 1 bis 3 Stunden.

19. Verfahren nach Anspruch 18, wobei die Reduktionstemperatur 520°C ist und der zweite Teilschritt eine Dauer von 2 Stunden hat.

20. Verfahren nach Anspruch 1, wobei die Zersetzung des Oxalats unter Luft bei einer Temperatur von 250 bis 600°C durchgeführt wird.

21. Metallpulver oder Pulver einer Metalllegierung, das aus schwammigen und filamentösen Körnern besteht, die durch das Verfahren nach einem der Ansprüche 1 bis 20 erhalten werden können.

22. Pulver nach Anspruch 21, in dem die Körner eine Größe zwischen 10 und 50 µm haben.

23. Eisenpulver mit schwammiger und filamentöser Mikrostruktur, das die folgenden Eigenschaften aufweist:

   - Gehalt an Gesamteisen: gleich 98% oder höher;
   - Gehalt an elementarem Eisen: gleich 95,7% oder höher;
   - Wasserstoffverlust: gleich 1,3% oder darunter;
   - spezifische Oberfläche: gleich 0,50 m$^2$/g oder darüber;
   - Subgranolometrie nach Fischer: 3,25 bis 3,5 µm;
   - Granulometrie, erhalten durch Sieben:

      - mehr als 70% der Partikel mit einer Größe unter 45 µm;
      - weniger als 1% der Partikel mit einer Größe über 150 µm;

   - Verhalten des Rohlings: "Green Force" bei einem Formungsdruck von 276 MPa: gleich 50 MPa oder darüber, bestimmt nach der Norm ASTM B312-56T.

24. Pressling, der durch Verpressen mindestens eines Metallpulvers oder eines Legierungspulvers nach einem der Ansprüche 21 bis 23 erhalten werden kann.

25. Pressling nach Anspruch 24, in dem eine zusätzliche Verbindung oder mehrere zusätzliche Verbindungen dem mindestens einen Metallpulver oder Legierungspulver zugesetzt ist (sind).

26. Pressling nach Anspruch 25, in dem die Verbindung oder die Verbindungen unter Keramik, ionischen Verbindungen, Hydriden, ferromagnetischen Metallen, Hydroxiden, Oxiden, flüssigen aliphatischen oder cyclischen organischen Verbindungen ausgewählt ist (sind).

27. Pressling nach Anspruch 24, bei dem das Verpressen bei einem Verpressdruck von 50 bis 100 MPa durchgeführt wurde.

28. Pressling nach Anspruch 24, bei dem das Verpressen bei einem Verpressdruck von 50 bis 1.000 MPa durchgeführt wurde.

29. Pressling nach einem der Ansprüche 24 bis 28, bei dem man außerdem während oder nach dem Verpressen ein partielles Sintern durchführt.

**30.** Pressling nach Anspruch 29, bei dem das partielle Sintern unter reduzierender oder neutraler Atmosphäre durchgeführt wird.

**31.** Pressling nach Anspruch 29 oder 30, bei dem das Sintern bei einer Temperatur von 400 bis 600°C durchgeführt wird.

**32.** Verwendung des Metallpulvers nach einem der Ansprüche 21 bis 23 bei der Herstellung von weichen oder harten magnetischen Materialien.

**33.** Verwendung nach Anspruch 32, bei der das Metallpulver unter ferromagnetischen Pulvern, wie zum Beispiel Eisen, Kobalt, Nickel und ihre Legierungen, ausgewählt wird.

**34.** Verwendung des Metallpulvers nach einem der Ansprüche 21 bis 23 zur Herstellung von porösen Elektroden.

**35.** Verwendung des Metallpulvers nach einem der Ansprüche 21 bis 23 zur Herstellung von Katalysatorträgern.

**36.** Verwendung des geschmolzenen Metallpulvers nach einem der Ansprüche 21 bis 23 zur Herstellung von Metallstücken komplizierter Form durch Verpressen.

**37.** Verwendung des Metallpulvers nach einem der Ansprüche 21 bis 23 in der Pulvermetallurgie.

**38.** Verwendung des Metallpulvers nach einem der Ansprüche 21 bis 23 in pyrotechnischen Zusammensetzungen.

**39.** Weiches oder hartes (ferro)magnetisches Material, das den Pressling nach einem der Ansprüche 24 bis 31 umfasst.

**40.** Poröse Elektrode, die den Pressling nach einem der Ansprüche 24 bis 31 umfasst.

**41.** Katalysatorträger, der den Pressling nach einem der Ansprüche 24 bis 31 umfasst.

**42.** Mechanisches Teil, das den Pressling nach einem der Ansprüche 24 bis 31 umfasst.

**43.** Pyrotechnische Erhitzungszusammensetzung, die das Eisenpulver nach einem der Ansprüche 21 bis 23 umfasst.

**44.** Pyrotechnische Erhitzungszusammensetzung nach Anspruch 43, die außerdem ein starkes Oxidationsmittel, ausgewählt aus Kaliumperchlorat, Bleibioxid, Wolframoxid und Eisenoxid, in einem Gewichtsanteil von 80 bis 88% Eisenpulver pro 12 bis 20% Oxidationsmittel, umfasst.

**45.** Pyrotechnische Erhitzungszusammensetzung nach Anspruch 43, mit der Gewichtszusammensetzung 84% Eisenpulver und 16% Kaliumperchlorat.

**46.** Pastille einer pyrotechnischen Erhitzungszusammensetzung nach einem der Ansprüche 43 bis 45, die eine Rohdichte von 3,2 bis 3,8 hat.

**47.** Thermisches Element, das Pastillen nach Anspruch 46 umfasst.

**48.** Verwendung des Eisenpulvers nach einem der Ansprüche 21 bis 23 in thermischen Elementen.

FIG. 1

FIG. 2 A

FIG. 2 B

FIG. 2 C

FIG. 3 A

FIG. 3 B

FIG. 3 C

FIG. 4

EP 1 059 134 B1